# EUROPÄISCHE PATENTSCHRIFT

(11) **EP 3 196 447 B1**
(45) Veröffentlichungstag und Bekanntmachung des Hinweises auf die Patenterteilung: **10.03.2021**
(21) Anmeldenummer: 17152139.6
(22) Anmeldetag: 19.01.2017
(51) Int. Cl.: F02D 41/00, F01D 23/00, F02B 39/10, F02D 41/14

(54) **VERFAHREN UND STEUERVORRICHTUNG ZUM BETREIBEN EINER ANTRIEBSVORRICHTUNG**
METHOD AND CONTROL DEVICE FOR OPERATING A DRIVE DEVICE
PROCÉDÉ ET DISPOSITIF DE COMMANDE DESTINÉ À FAIRE FONCTIONNER UN DISPOSITIF D'ENTRAÎNEMENT

(30) Priorität: 25.01.2016 DE 102016200982
(43) Veröffentlichungstag der Anmeldung: 26.07.2017
(73) Patentinhaber: VOLKSWAGEN AKTIENGESELLSCHAFT, 38440 Wolfsburg (DE)
(72) Erfinder: REBOHL, Thorsten, 38527 Meine (DE); CASSEBAUM, Oliver, 38448 Wolfsburg (DE); WESTENDORF, Johannes, 38104 Braunschweig (DE); GROENENDIJK, Axel, 38518 Gifhorn (DE); NITZKE, Hans-Georg, 38547 Wettmershagen (DE)
(74) Vertreter: MFG Patentanwälte Meyer-Wildhagen Meggle-Freund Gerhard PartG mbB

(56) Entgegenhaltungen:
- EP-A1- 1 300 562
- EP-A1- 1 347 158
- EP-A1- 1 723 326
- EP-A1- 2 607 645
- DE-A1-102011 005 502
- GB-A- 2 490 943
- JP-A- 2007 198 227
- Chapter 6 Gas Exchange Processes: In: J. B. Heywood: "Internal Combustion Engine Fundamentals", 31. Dezember 1988 (1988-12-31), McGraw-Hill, XP002769987, ISBN: 0-07-100499-8 Seiten 261-262, * Seite 262 *

## Beschreibung

Die Erfindung betrifft ein Verfahren und eine Steuervorrichtung zum Betreiben einer Antriebsvorrichtung, beispielsweise einer Antriebsvorrichtung eines Kraftfahrzeugs. Die Erfindung betrifft insbesondere ein Verfahren und eine Steuervorrichtung zum Betreiben der Antriebsvorrichtung in einem Nulllastbetrieb oder einem Teillastbetrieb der Verbrennungskraftmaschine, insbesondere unmittelbar vor dem Anfordern einer Lasterhöhung.

Verbrennungsmotoren mit Abgasturbolader ohne elektrischer Aufladeunterstützung bauen einen Ladedruck langsam in Abhängigkeit einer vorhandenen Abgasenthalpie auf. Die Abgasenthalpie wird von einem Massenstrom durch den Verbrennungsmotor und von einer eingespritzten Kraftstoffmasse beeinflusst. Die maximal eingespritzte Kraftstoffmasse ist abhängig von einer Motorfüllung, die wiederum u.a. von dem Ladedruck abhängt.

Um schnell auf Lastanforderungen reagieren zu können, ist es notwendig, den Ladedruck schnell anzupassen, um so die maximal eingespritzte Kraftstoffmasse zu erhöhen. Dazu werden oftmals elektrisch betriebene Verdichter eingesetzt, beispielsweise elektrische Zusatzverdichter oder elektrisch unterstützte Abgasturbolader.

Die DE 101 58 913 A1 betrifft ein Verfahren zur Voraktivierung eines Aufladegeräts zur Erhöhung einer Luftzufuhr durch einen Verbrennungsmotor, beispielsweise eines elektrischen Boosters, wobei das Aufladegerät infolge einer Aktivierung einer Kupplung oder eines Gaspedals oder, wenn ein Schubbetrieb über eine vorgegebene Zeitspanne anhält, voraktiviert wird. Ein ähnliches Verfahren ist auch aus der DE 102 35 891 A1 bekannt.

Die EP 1 355 052 A1 betrifft ein Verfahren zum Erhöhen eines Ladedrucks, wobei ein Bypass, der einen elektrisch betriebenen Kompressor umgeht, ganz oder teilweise geschlossen sein kann, solange der elektrisch betriebene Kompressor deaktiviert ist, so dass der Kompressor bei seiner Aktivierung bereits langsam dreht und ein gewünschter Ladedruck schneller aufgebaut werden kann.

Die EP 1 300 562 A1, die EP 1 347 158 A1 und die EP 1 723 326 A0 beschreiben jeweils Steuerverfahren für Verbrennungsmotoren mit einem Turbolader, wobei der Turbolader in einem Leerlauf-Betrieb und einem Teillast-Betrieb in einem Leerlaufmodus betrieben wird.

Die GB 2 490 943 A, die DE 10 2011 005 502 A1 und die JP 2007 19827 A beschreiben jeweils Steuerverfahren für Verbrennungsmotoren, die durch einen Kompressor aufgeladen werden.

Die EP 2 607 645 A1 beschreibt eine Vorrichtung zur Reduzierung eines Turbolochs mittels eines Sekundärkraftstoffs, der vor einer Turbine eines Turboladers verbrannt wird.

Die XP002769987 (HEYWOOD, J. B. Internal Combustion Engine Fundamentals. McGraw-Hill, Dezember 1988, ISBN 0-07-100499-8, Seiten 262-263) beschreibt Charakteristiken eines Kompressors in einem Kennfeld.

Aufgabe der vorliegenden Erfindung ist es, ein Verfahren und eine Steuervorrichtung bereitzustellen, die es erlauben, bei geringem Energiebedarf einen gewünschten Ladedruck schnell bereitzustellen.

Diese Aufgabe wird durch das erfindungsgemäße Verfahren zum Betreiben einer Antriebsvorrichtung nach Anspruch 1 und die erfindungsgemäße Steuervorrichtung zum Betreiben einer Antriebsvorrichtung nach Anspruch 7 gelöst.

Gemäß einem ersten Aspekt betrifft die vorliegende Erfindung ein Verfahren zum Betreiben einer Antriebsvorrichtung mit einer Verbrennungskraftmaschine, einer Luftzuführung zum Zuführen von Luft zur Verbrennungskraftmaschine und einer steuerbaren Verdichtungskomponente zum Beeinflussen eines Drucks in der Luftzuführung, umfassend: Betreiben der steuerbaren Verdichtungskomponente mit einer Bereitschaftsdrehzahl, wenn ein Verbrennungskraftmaschinenmoment der Verbrennungskraftmaschine kleiner als ein vorgegebenes Moment ist.

Gemäß einem zweiten Aspekt betrifft die vorliegende Erfindung eine Steuervorrichtung zum Betreiben einer Antriebsvorrichtung mit einer Verbrennungskraftmaschine, einer Luftzuführung zum Zuführen von Luft zur Verbrennungskraftmaschine und einer steuerbaren Verdichtungskomponente zum Beeinflussen eines Drucks in der Luftzuführung, wobei die Steuervorrichtung dazu ausgebildet ist, ein Verfahren nach dem ersten Aspekt auszuführen.

Weitere vorteilhafte Ausgestaltungen der Erfindung ergeben sich aus den Unteransprüchen und der folgenden Beschreibung bevorzugter Ausführungsbeispiele der vorliegenden Erfindung.

Die vorliegende Erfindung betrifft ein Verfahren zum Betreiben einer Antriebsvorrichtung, beispielsweise einer Antriebsvorrichtung eines Kraftfahrzeugs, die eine Verbrennungskraftmaschine, eine Luftzuführung zum Zuführen von Luft zur Verbrennungskraftmaschine und eine steuerbare Verdichtungskomponente zum Beeinflussen eines Drucks in der Luftzuführung aufweist. Gemäß dem Verfahren wird die steuerbare Verdichtungskomponente mit einer Bereitschaftsdrehzahl betrieben, wenn ein Verbrennungskraftmaschinenmoment der Verbrennungskraftmaschine kleiner als ein vorgegebenes Moment ist.

Durch das erfindungsgemäße Verfahren kann die steuerbare Verdichtungskomponente (Aufladungskomponente) in einem Nulllastbetrieb oder einem Teillastbetrieb der Verbrennungskraftmaschine bei der Bereitschaftsdrehzahl betrieben werden, so dass die steuerbare Verdichtungskomponente bei einer Anforderung einer Lasterhöhung der Verbrennungskraftmaschine bereits dreht und ein für die Lasterhöhung notwendiger Ladedruck schneller als ohne Voraktivierung eingestellt werden kann. Dadurch lässt sich ein angefordertes Verbrennungskraftmaschinenmoment (nachfolgend auch als Moment bezeichnet) schneller erzeugen, wobei der Energieverbrauch gleichzeitig in Grenzen gehalten wird. Insbesondere kann durch den schnelleren Momentenaufbau eine Anfahrperformance gesteigert werden. Außerdem können durch schnelleres Erreichen einer gewünschten Gaszusammensetzung, die insbesondere als ein Verhältnis von Frischluft zu einer Abgasrückführrate (AGR) definiert ist, nach der Momentanforderung Sickstoffoxidemissionen (NOx-Emissionen) und/oder Rußemissionen verringert werden.

Die steuerbare Verdichtungskomponente (nachfolgend als Verdichtungskomponente bezeichnet) wirkt druckerzeugend und kann unabhängig von einer Betriebssituation der Verbrennungskraftmaschine betrieben werden. Beispielsweise kann die Verdichtungskomponente eine elektrisch betriebene Verdichtungskomponente sein. Eine elektrische Aufladung zeichnet sich durch ihre Unabhängigkeit von der Abgasenthalpie aus. Die elektrisch betriebene Verdichtungskomponente kann ein elektrischer Zusatzverdichter, der beispielsweise in der Luftzuführung angeordnet ist, sein oder einen solchen umfassen. Alternativ kann die elektrisch betriebene Verdichtungskomponente ein Abgasturbolader, der einen externen Elektroantrieb aufweist, sein oder einen solchen umfassen.

Es besteht die Möglichkeit, dass die Antriebsvorrichtung mehrere gleichartige oder unterschiedliche Verdichtungskomponenten aufweist, wobei jede der unterschiedlichen Verdichtungskomponenten in einem Nulllastbetrieb oder einem Teillastbetrieb der Verbrennungskraftmaschine bei ihrer Bereitschaftsdrehzahl betrieben wird, um den Ladedruck bei einer Anforderung einer Lasterhöhung schnell erhöhen zu können. Beispielsweise kann die elektrisch betriebene Verdichtungskomponente einen elektrischen Zusatzverdichter, der beispielsweise in der Luftzuführung angeordnet ist, und einen Abgasturbolader, der einen externen Elektroantrieb aufweist, umfassen.

Steht die Verdichtungskomponente vor einer Anforderung einer Erhöhung des Verbrennungskraftmaschinenmoments (auch als Anforderung einer Momenterhöhung der Verbrennungskraftmaschine bezeichnet) bzw. vor einem Boostevent der Verdichtungskomponente, bei dem die Verdichtungskomponente eine hohe Leistung, insbesondere eine maximale Leistung, liefert, still, konsumiert sie keine Energie. Allerdings ist eine Hochlaufverzögerung beim Boostevent größer als in einem sogenannten Standby-Betrieb, in dem die Verdichtungskomponente bei der Bereitschaftsdrehzahl dreht. In Abhängigkeit eines Fahrzustands eines Fahrzeugs kann somit entschieden werden, ob die Verdichtungskomponente außerhalb des Boostevents stillsteht oder bei der Bereitschaftsdrehzahl betrieben wird.

Die Bereitschaftsdrehzahl hängt von einem Luftmassenstrom durch die Luftzuführung ab. Beispielsweise kann die Bereitschaftsdrehzahl mit steigendem Luftmassenstrom zunehmen. Die Bereitschaftsdrehzahl kann somit so an den Luftmassenstrom angepasst werden, dass die Verdichtungskomponente unter aktuellen Betriebsbedingungen der Antriebsvorrichtung lediglich eine geringe Leistung liefert.

Das Druckverhältnis über der Verdichtungskomponente entspricht im Wesentlichen
bei der Bereitschaftsdrehzahl einer Stopfgrenze.

Bei einem Betrieb der Verdichtungskomponente entlang der Stopfgrenze liegt ein maximaler Volumenstrom durch die Verdichterkomponente vor. Der maximale Volumenstrom einer Verdichtungskomponente, beispielsweise eines Radialverdichters, ist in der Regel durch den Querschnitt am Verdichtereintritt begrenzt. Erreicht die Luft im Radeintritt die Schallgeschwindigkeit, so ist kein weiteres Anwachsen des Durchsatzes mehr möglich. Üblicherweise kann die Stopfgrenze mit steigendem Luftmassenstrom steigen. Das Erzeugen eines Druckverhältnisses entlang der Stopfgrenze oder kleiner erlaubt eine schnelle Erhöhung des Ladedrucks bei der Anforderung einer Momenterhöhung bei niedrigem Energieverbrauch.

Das Verbrennungskraftmaschinenmoment kann ein aktuelles Verbrennungskraftmaschinenmoment sein. Zum Beispiel kann das Verbrennungskraftmaschinenmoment ein von der Verbrennungskraftmaschine an eine Kurbelwelle der Antriebsvorrichtung abgegebenes, insbesondere gegenwärtig abgegebenes, Drehmoment, ein von der Verbrennungskraftmaschine erzeugtes, insbesondere gegenwärtig erzeugtes, Drehmoment oder ein angefordertes, insbesondere gegenwärtig angefordertes, Drehmoment der Verbrennungskraftmaschine sein. Alternativ kann das Verbrennungskraftmaschinenmoment auf Grundlage des abgegebenen, insbesondere gegenwärtig abgegebenen, Drehmoments, des erzeugten, insbesondere gegenwärtig erzeugten, Drehmoments und/oder des angeforderten, insbesondere gegenwärtig angeforderten, Drehmoments der Verbrennungskraftmaschine bestimmt sein.

In manchen Ausführungsbeispielen kann das vorgegebene Moment geringer als ein Anteil eines unter aktuellen Betriebsbedingungen der Antriebsvorrichtung maximal erreichbaren Verbrennungskraftmaschinenmoments von 80 %, insbesondere von 60 %, insbesondere von 50 %, sein. Das vorgegebene Moment ist somit vorzugsweise geringer als in einem Volllastbetrieb der Antriebsvorrichtung.

In manchen Ausführungsbeispielen kann die steuerbare Verdichterkomponente dann mit der Bereitschaftsdrehzahl betrieben werden, wenn die Verbrennungskraftmaschine in einem vorgegebenen Betrieb arbeitet. Die Verbrennungskraftmaschine kann beispielsweise in dem vorgegebenen Betrieb arbeiten, wenn sich ein Fahrzeug, das die Antriebsvorrichtung mit der Verbrennungskraftmaschine umfasst, in einem vorgegebenen Fahrzustand befindet. Der vorgegebene Betrieb kann ein Schubbetrieb, ein Leerlaufbetrieb, ein Niederlastbetrieb oder ein anderer Betrieb sein, in dem das Verbrennungskraftmaschinenmoment der Verbrennungskraftmaschine kleiner als das vorgegebene Moment ist. Der vorgegebene Betrieb kann auch ein Betrieb der Antriebsvorrichtung bei abgeschalteter Verbrennungskraftmaschine, d.h. bei stillstehender Verbrennungskraftmaschine, sein.

Der vorgegebene Betrieb der Verbrennungskraftmaschine kann über eine Drehzahl der Verbrennungskraftmaschine, einen eingelegten Gang eines mit der Verbrennungskraftmaschine gekoppelten Getriebes, ein aktuelles Verbrennungskraftmaschinenmoment, einen Fahrerwunsch, beispielsweise eine Fahrpedalstellung, und/oder einen anderen Zustandsparameter der Antriebsvorrichtung bzw. des Fahrzeugs mit der Abtriebsvorrichtung festgestellt werden.

Gemäß dem Verfahren zum Betreiben einer Antriebsvorrichtung wird bestimmt, ob das Verbrennungskraftmaschinenmoment der Verbrennungskraftmaschine kleiner als das vorgegebene Moment ist. Beim Bestimmen, ob das Verbrennungskraftmaschinenmoment der Verbrennungskraftmaschine kleiner als das vorgegebene Moment ist, kann bestimmt werden, ob die Verbrennungskraftmaschine in dem vorgegebenen Betrieb arbeitet. Beispielsweise kann eine Drehzahl der Verbrennungskraftmaschine, ein eingelegter Gang des mit der Verbrennungskraftmaschine gekoppelten Getriebes, ein aktuelles Verbrennungskraftmaschinenmoment, ein Fahrerwunsch, beispielsweise eine Fahrpedalstellung, und/oder ein anderer Zustandsparameter der Antriebsvorrichtung bzw. des Fahrzeugs ermittelt werden und auf Grundlage der ermittelten Daten festgestellt werden, ob das Verbrennungskraftmaschinenmoment der Verbrennungskraftmaschine kleiner als das vorgegebene Moment ist. Zum Beispiel kann das Verbrennungskraftmaschinenmoment der Verbrennungskraftmaschine kleiner als das vorgegebene Moment sein, wenn die Drehzahl der Verbrennungskraftmaschine niedrig ist, ein hoher Gang eingelegt ist und das Verbrennungskraftmaschinenmoment niedrig ist.

In manchen Ausführungsbeispielen kann das Verfahren zum Betreiben einer Antriebsvorrichtung weiterhin das Ermitteln, ob ein Ereignis vorliegt, infolge dessen eine Anforderung einer Erhöhung des Verbrennungskraftmaschinenmoments, insbesondere über das vorgegebene Moment, erwartet wird, umfassen, wobei die Verbrennungskraftmaschine mit der Bereitschaftsdrehzahl betrieben wird, wenn das Verbrennungskraftmaschinenmoment kleiner als das vorgegebene Moment ist und ein Ereignis vorliegt, infolge dessen eine Anforderung einer Erhöhung des Verbrennungskraftmaschinenmoments erwartet wird. Dadurch kann der Betrieb der Verdichtungskomponente bei der Bereitschaftsdrehzahl auf eine kurze Zeitspanne vor einer möglichen Anforderung einer Momenterhöhung begrenzt werden, um Energie einzusparen.

Das Ereignis, infolge dessen eine Anforderung einer Erhöhung des Verbrennungskraftmaschinenmoments erwartet wird, (auch als Momenterhöhungserwartungsereignis bezeichnet) kann ein Ereignis sein, infolge dessen eine Anforderung einer Erhöhung des Verbrennungskraftmaschinenmoments mit hoher Wahrscheinlichkeit erfolgen kann. Vorzugsweise wird durch das Momenterhöhungserwartungsereignis jedoch die Erhöhung des Verbrennungskraftmaschinenmoments nicht bewirkt. Das Momenterhöhungswartungsereignis unterscheidet sich daher vorzugsweise von einer Momenterhöhungsanforderung, die eine Erhöhung des Verbrennungskraftmaschinenmoments üblicherweise zwangsläufig einleitet.

Gemäß dem Verfahren zum Betreiben einer Antriebsvorrichtung kann, wenn das Verbrennungskraftmaschinenmoment der Verbrennungskraftmaschine kleiner als das vorgegebene Moment ist, ermittelt werden, ob ein Momenterhöhungserwartungsereignis vorliegt, infolge dessen eine Erhöhung des Verbrennungskraftmaschinenmoments angefordert werden kann. Wenn ein Momenterhöhungserwartungsereignis vorliegt, kann die Drehzahl der Verdichtungskomponente auf die Bereitschaftsdrehzahl erhöht werden.

In manchen Ausführungsbeispielen kann das Ereignis, infolge dessen eine Anforderung einer Erhöhung des Verbrennungskraftmaschinenmoments erwartet wird, eine Änderung einer Umgebungsbedingung, insbesondere eine Änderung mindestens einer von mehreren Umgebungsbedingungen, und/oder eine Änderung eines Zustands der Antriebsvorrichtung, bei der das Verbrennungskraftmaschinenmoment der Verbrennungskraftmaschine unterhalb des vorgegebenen Moments bleibt, umfassen.

Eine Änderung der Umgebungsbedingung kann beispielsweise vorliegen, wenn sich ein Abstand zu einem voranfahrenden Fahrzeug verringert, wobei ein bevorstehender Überholvorgang zu erwarten ist, wenn eine Aufhebung einer Geschwindigkeitsbegrenzung, beispielsweise ein Zeichen "Ende der zulässigen Höchstgeschwindigkeit", ein Zeichen "Ende sämtlicher Streckenverbote" oder ein Ortsausgangsschild, erkannt wird, wenn eine Ampel von rot auf gelb bzw. grün schaltet, ein voranfahrendes Fahrzeug anfährt oder beschleunigt, ein Verkehrsschild mit einer Aufforderung, Vorfahrt zu gewähren, beispielsweise ein Stoppschild, und/oder ein Zebrastreifen erkannt wird und/oder wenn sich eine andere Umgebungsbedingung in der Weise ändert, dass eine Anforderung einer Momenterhöhung der Verbrennungskraftmaschine wahrscheinlich ist, beispielsweise mit einer Wahrscheinlichkeit von mindestens 70 %, bevorsteht. Die Änderung der Umgebungsbedingung kann durch externe Signale, beispielsweise Car2x-Signale, zur Verfügung gestellt werden.

Eine Änderung des Zustands der Antriebsvorrichtung kann vorliegen, wenn eine Kupplung betätigt wird, beispielsweise um eine Motor-Start-Stopp-Automatik zu deaktivieren, wenn ein Gang eingelegt wird, wenn ein vorgegebener Schalter zum Vorkonditionieren der Verbrennungskraftmaschine aktiviert wird oder wenn der Zustand der Antriebsvorrichtung in einer Weise geändert wird, dass eine Anforderung einer Momenterhöhung der Verbrennungskraftmaschine wahrscheinlich bevorsteht. Die Änderung des Zustands der Antriebsvorrichtung kann durch fahrzeugimmanente Signale zur Verfügung gestellt werden.

In manchen Ausführungsbeispielen kann die Bereitschaftsdrehzahl der Verbrennungskraftmaschine von dem vorliegenden Ereignis, infolge dessen eine Anforderung einer Erhöhung des Verbrennungskraftmaschinenmoments erwartet wird, abhängen. Beispielsweise kann die Bereitschaftsdrehzahl mit einer Wahrscheinlichkeit eines bevorstehenden Momenterhöhungsereignisses korreliert sein. Zum Beispiel kann ein bevorstehender Boostereinsatz bei einer niedrigen Drehzahl der Verbrennungskraftmaschine, einem hohen, eingelegten Gang und einem niedrigen Verbrennungskraftmaschinenmoment wahrscheinlicher sein als bei einer hohen Drehzahl der Verbrennungskraftmaschine und einem hohen Verbrennungskraftmaschinenmoment. Dementsprechend kann für die erstgenannte Fahrsituation die Verdichtungskomponente auf einer höheren Bereitschaftsdrehzahl betrieben werden, um schnellstmöglich beim Boostevent Ladedruck aufzubauen, als in der zweitgenannten Fahrsituation oder in einer Fahrsituation, bei der eine Drehzahl zwischen der niedrigen und der hohen Drehzahl der Verbrennungskraftmaschine vorliegt, ein Gang zwischen dem niedrigen und dem hohen Gang eingelegt ist und/oder ein Verbrennungskraftmaschinenmoment zwischen dem hohen und dem niedrigen Verbrennungskraftmaschinenmoment vorliegt. Es geht somit darum, anhand der genannten Eingangsparameter vorherzusagen, ob und bei welcher Drehzahl die Verdichtungskomponente vor dem Boostevent vorgehalten wird.

Gemäß dem Verfahren zum Betreiben der Abtriebsvorrichtung kann die Verdichtungskomponente deaktiviert werden, sobald nach dem Erhöhen des Moments der Verbrennungskraftmaschine ein Deaktivierungskriterium erfüllt ist, beispielsweise ein gewünschter Ladedruck vorliegt, das gewünschte bzw. angeforderte Verbrennungskraftmaschinenmoment erreicht ist und/oder wenn die zur Verfügung stehende, insbesondere elektrische Energie für andere Anwendungen verbraucht wird.

Alternativ oder zusätzlich kann bei dem Verfahren zum Betreiben der Abtriebsvorrichtung, wenn ein Momenterhöhungserwartungsereignis vorliegt, ermittelt werden, ob eine Momenterhöhung angefordert wird, und, wenn eine Momenterhöhung angefordert wird, das Moment der Verbrennungskraftmaschine erhöht werden. Die Momenterhöhungsanforderung kann beispielsweise eine Betätigung eines Gaspedals oder eines Gashebels der Antriebsvorrichtung durch den Fahrer enthalten. Wenn eine Momenterhöhung angefordert wird, kann die Drehzahl der Verdichtungskomponente von der Bereitschaftsdrehzahl auf eine Boostdrehzahl erhöht werden. Die Boostdrehzahl kann vorzugsweise größer als die Bereitschaftsdrehzahl sein. Insbesondere kann die Verdichtungskomponente bei der Boostdrehzahl eine unter aktuellen Betriebsbedingungen maximal erreichbare Verdichtungsleistung liefern.

In manchen Ausführungsbeispielen kann die Verdichtungskomponente, wenn eine Momenterhöhung der Verbrennungskraftmaschine nicht innerhalb einer vorgegebenen Zeitspanne nach dem Momenterhöhungserwartungsereignis angefordert wird, deaktiviert werden. Die vorgegebene Zeitspanne kann im Sekundenbereich, beispielsweise im Bereich von 0,1 s bis 300 s, liegen und kann gegebenenfalls von dem Momenterhöhungserwartungsereignis abhängen. Beispielsweise kann die vorgegebene Zeitspanne ca. 3 Sekunden betragen, wenn erkannt wird, dass eine Geschwindigkeitsbegrenzung aufgehoben ist oder ein voranfahrendes Fahrzeug beschleunigt, und ca. 180 Sekunden betragen, wenn erkannt wird, dass ein Abstand zu einem voranfahrenden Fahrzeug unter einem vorgegebenen Abstand liegt und wahrscheinlich ein Überholvorgang bevorsteht. Die Zeitangaben sind nicht auf die genannten Angaben beschränkt und können beliebig angepasst werden.

Außerdem kann die Verdichtungskomponente vor Ablauf der vorgegebenen Zeitspanne deaktiviert werden. Dies kann beispielsweise erforderlich sein, um den Energiespeicher vor übermäßigen Belastungen zu schützen.

Die vorliegende Erfindung betrifft weiterhin eine Steuervorrichtung zum Betreiben einer Antriebsvorrichtung mit einer Verbrennungskraftmaschine, einer Luftzuführung zum Zuführen von Luft zur Verbrennungskraftmaschine und einer steuerbaren Verdichtungskomponente zum Beeinflussen eines Drucks in der Luftzuführung, wobei die Steuervorrichtung dazu ausgebildet ist, die steuerbare Verdichtungskomponente mit einer Bereitschaftsdrehzahl zu betreiben, wenn ein Verbrennungskraftmaschinenmoment der Verbrennungskraftmaschine kleiner als ein vorgegebenes Moment ist.

Die Steuervorrichtung ist dazu ausgebildet, das voranstehend beschriebene Verfahren zum Betreiben der Verbrennungskraftmaschine auszuführen.

Die Steuervorrichtung kann einen Prozessor, beispielsweise einen Mikroprozessor, aufweisen, der dazu ausgebildet ist, das beschriebene Verfahren zum Betreiben der Antriebsvorrichtung auszuführen. Die Steuervorrichtung kann weiterhin einen Datenspeicher aufweisen, in dem vorzugsweise ein Programm hinterlegt ist, das Anweisungen für den Prozessor enthält, um diesen entsprechend dem beschriebenen Verfahren zu steuern. In dem Datenspeicher können zudem Werte bzw. Parameter für das vorgegebene Moment, den vorgegebenen Betrieb, mögliche Momenterhöhungswartungsereignisse und gegebenenfalls vorgegebene Zeitspannen für die Deaktivierung der Verdichtungskomponente hinterlegt sein.

Die Steuervorrichtung kann eine Reihe von Signaleingängen und Signalausgängen aufweisen. Über die Signaleingänge können beispielsweise Signale empfangen werden, die das aktuelle Verbrennungskraftmaschinenmoment, den aktuellen Betriebszustand der Verbrennungskraftmaschine und/oder die aktuell erkannten Momenterhöhungserwartungsereignisse enthalten. Über die Signalausgänge kann insbesondere die steuerbare Verdichtungskomponente gesteuert werden.

Die Steuervorrichtung kann in eine Motorsteuerung der Antriebsvorrichtung integriert sein.

Die vorliegende Offenbarung betrifft weiterhin ein Fahrzeug mit einer Antriebsvorrichtung, die eine Verbrennungskraftmaschine, eine Luftzuführung zum Zuführen von Luft zur Verbrennungskraftmaschine, eine aktiv steuerbare Verdichtungskomponente zum Beeinflussen eines Drucks in der Luftzuführung und eine Steuervorrichtung umfasst. Die Steuervorrichtung ist dazu ausgebildet, das oben beschriebene Verfahren zum Betreiben einer Antriebsvorrichtung auszuführen. Die Verbrennungskraftmaschine kann ein Ottomotor oder eine DieselBrennkraftmaschine sein.

Zusammenfassend kann die Verbrennungskraftmaschine mittels einer elektrischen Aufladung, insbesondere durch einen elektrischen Verdichter, auch im Schubbetrieb, in einer Leerlaufphase oder bei niedrigen Lasten vorkonditioniert werden, indem der elektrische Verdichter vor der eigentlichen Lastanforderung aktiviert wird. Vorteil der elektrischen Aufladung ist deren Unabhängigkeit von der nicht vorhandenen bzw. geringen Abgasenthalpie während des Schubbetriebs, der Leerlaufphase oder bei niedrigen Lasten. Der elektrische Verdichter kann schon vor einer Momentanforderung durch den Fahrer zu einer Vorkonditionierung des Ladedrucks beitragen, indem sie direkt vor der Lastanforderung aktiv angesteuert wird.

Die Standby-Drehzahl-Niveauregelung kann auch unter dem Aspekt vorteilhaft verwendet werden, dass durch den Standby-Betrieb des elektrischen Verdichters auf einem gewissen Drehzahlniveau bzw. der Bereitschafsdrehzahl sich die Gaszusammensetzung in der Frischluftstrecke schneller auf eine aktuelle gewünschte Zusammensetzung ändert, beispielsweise durch ein verbessertes Ausspülen von AGR-lastigen Restgasen, wenn nun ein Betriebszustand mit weniger AGR gewünscht ist.

Ausführungsbeispiele der Erfindung werden nun beispielhaft und unter Bezugnahme auf die beigefügten Zeichnungen beschrieben. Es zeigen:
- Fig. 1: eine schematische Darstellung eines Ausführungsbeispiels einer Antriebsvorrichtung mit einer Steuervorrichtung gemäß der Erfindung;
- Fig. 2: ein Flussdiagramm eines Verfahrens zum Betreiben der in Fig. 1 gezeigten Antriebsvorrichtung gemäß der Erfindung;
- Fig. 3: eine schematische Darstellung eines Kennfelds eines elektrischen Verdichters;
- Fig. 4: ein schematischer Verlauf einer Bereitschaftsdrehzahl in Abhängigkeit eines reduzierten Massenstroms;
- Fig. 5: eine schematische Darstellung eines Ladedruckverlaufs vor und bei einer Momenterhöhung eines Motormoments; und
- Fig. 6: eine schematische Darstellung eines Motormomentverlaufs vor und bei der Momenterhöhung des Motormoments.

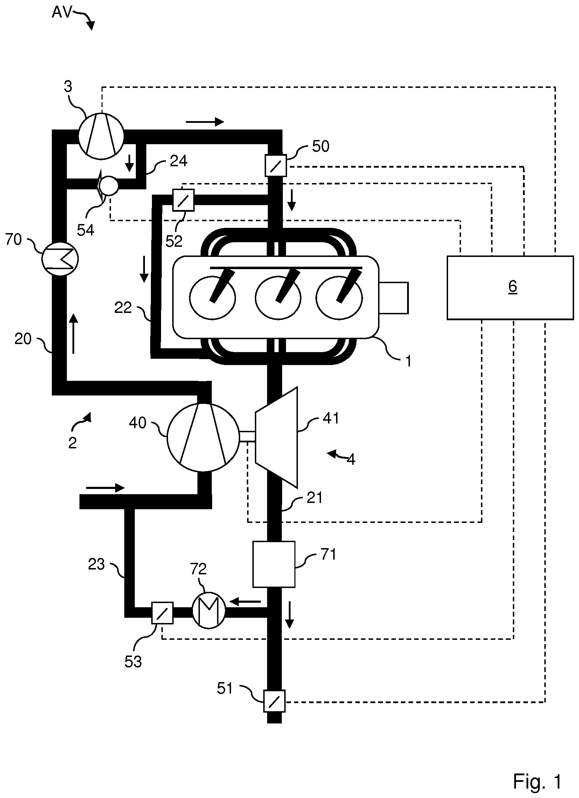

Fig. 1 zeigt einen schematischen Aufbau einer Antriebsvorrichtung AV. Die Antriebsvorrichtung AV umfasst eine Verbrennungskraftmaschine in Form eines Verbrennungsmotors 1, ein Luftführungssystem 2 mit einer Luftzuführung 20, einen elektrisch betreibbaren Zusatzverdichter 3, einen Abgasturbolader 4, einige Absperrorgane und eine Steuervorrichtung 6.

Der Verbrennungsmotor 1 ist in dem Luftführungssystem 2 zwischen der Luftzuführung 20 und einem Abgaskanal 21 angeordnet. Der Verbrennungsmotor 1 umfasst mehrere Zylinder, in denen sich Kolben bewegen und die über Einlassventile (nicht dargestellt) mit der Luftzuführung 20 und über Auslassventile (nicht dargestellt) mit dem Abgaskanal 21 verbunden sind. Die Einlass- und Auslassventile sind mit Hilfe der Steuervorrichtung 6 steuerbar. Der Verbrennungsmotor 1 dient der Erzeugung eines Motormoments.

Der Zusatzverdichter 3 ist in der Luftzuführung 20 in Strömungsrichtung vor dem Verbrennungsmotor 1 angeordnet. Der Zusatzverdichter 3 ist dazu ausgebildet, einen Ladedruck in der Luftzuführung 20 oder in einem Abschnitt der Luftzuführung 20 zu erzeugen. Der Zusatzverdichter 3 ist mit der Steuervorrichtung 6 steuerbar.

Der Abgasturbolader 4 umfasst einen Verdichter 40 und eine Abgasturbine 41 mit variabler Turbinengeometrie (VTG). Der Verdichter 40 ist in der Luftzuführung 20 in Strömungsrichtung vor dem Zusatzverdichter 3 angeordnet. Die Abgasturbine 41 ist in dem Abgaskanal 21 in Strömungsrichtung nach dem Verbrennungsmotor 1 angeordnet. Durch die Abgasenthalpie wird die Abgasturbine 41 in Bewegung versetzt. Dadurch wird auch der Verdichter 40 angetrieben und es entstehen ein Massenstrom und ein Ladedruck. Da eine Abgasenthalpie in einem Nulllast- bzw. Niederlastbetrieb des Verbrennungsmotors 1 gering ist, kann der Ladedruck bei einer Anforderung zur Motormomenterhöhung durch den Abgasturbolader 4 nur sehr träge aufgebaut werden. Daher ist unterstützend der Zusatzverdichter 3 vorgesehen, wie weiter unten im Detail ausgeführt wird.

Das Luftführungssystem 2 umfasst die Luftzuführung 20, den Abgaskanal 21, einen Bypass 22, einen Niederdruckbypass 23 und einen Zusatzverdichterbypass 24. Seitlich des Luftführungssystems 2 sind Pfeile dargestellt, die einen Massenstrom beim Betrieb der Antriebsvorrichtung AV andeuten. Die Luftzuführung 20 ist in Strömungsrichtung des Massenstroms (angegeben durch Pfeile) vor dem Verbrennungsmotor 1 angeordnet und ist dazu vorgesehen, Luft in den Verbrennungsmotor 1 zu führen. In der Luftzuführung 20 ist in Strömungsrichtung nach dem Zusatzverdichter 3 eine Drosselklappe 50 und in Strömungsrichtung vor dem Zusatzverdichter 3 ein Ladeluftkühler 70 angeordnet. Der Abgaskanal 21 ist in Strömungsrichtung des Massenstroms (angegeben durch Pfeile) nach dem Verbrennungsmotor 1 angeordnet und ist dazu vorgesehen, Luft aus dem Verbrennungsmotor 1 zu führen. In dem Abgaskanal 21 sind in Strömungsrichtung nach der Abgasturbine 41 des Abgasturboladers 4 eine Vorrichtung 71 zur Abgasnachbehandlung und eine Abgasklappe 51 angeordnet. Der Bypass 22 verbindet die Luftzuführung 20 in Strömungsrichtung nach der Drosselklappe 50 mit dem Abgaskanal 21 in Strömungsrichtung vor der Abgasturbine 41 des Abgasturboladers 4. In dem Bypass 22 ist ein Bypassventil 52, das als Standard-AGR-Ventil ausgebildet ist, angeordnet, um in Abhängigkeit der Stellung des Bypassventils 52 einen Massenstrom durch den Bypass 22 zuzulassen oder zu unterbrechen. Der Niederdruckbypass 23 verbindet die Luftzuführung 20 in Strömungsrichtung vor dem Zusatzverdichter 3 und vor dem Verdichter 40 des Abgasturboladers mit dem Abgaskanal 21 zwischen der Vorrichtung 71 zur Abgasnachbehandlung und der Abgasklappe 51. In dem Niederdruckbypass 23 ist ein Niederdruckbypassventil 53, das als Standard-AGR-Ventil ausgebildet ist, angeordnet, um in Abhängigkeit der Stellung des Niederdruckbypassventils 53 einen Massenstrom durch den Niederdruckbypass 23 zuzulassen oder zu unterbrechen. Außerdem ist in dem Niederdruckbypass 23 ein Kühler 72 zum Kühlen von rückgeführtem Abgas angeordnet. Der Zusatzverdichterbypass 24 verbindet einen Bereich der Luftzuführung 20 zwischen dem Verdichter 40 des Abgasturboladers 4 und dem Zusatzverdichter 3 mit einem Bereich der Luftzuführung 20 zwischen dem Zusatzverdichter 3 und der Drosselklappe 50.

Die Absperrorgane umfassen neben den Einlass- und Auslassventilen des Verbrennungsmotors 1, der Drosselklappe 50, der Abgasklappe 51, dem Bypassventil 52, das in dem Bypass 22 angeordnet ist, das Niederdruckbypassventil 53, das in dem Niederdruckbypass 23 angeordnet ist, und das Zusatzverdichterbypassventil 54, das in dem Zusatzverdichterbypass 24 angeordnet ist.

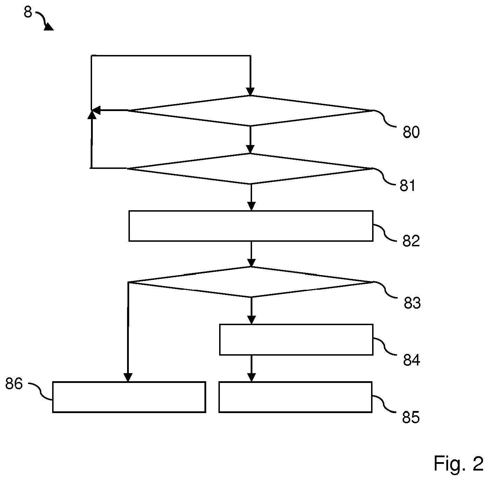

Die Steuervorrichtung 6 umfasst einen Prozessor, der dazu ausgebildet, ein Verfahren 7 zum Betreiben der Antriebsvorrichtung AV auszuführen, wie es nachfolgend mit Bezug auf Fig. 2 beschrieben wird. Die Steuervorrichtung 6 ist dazu mit dem Zusatzverdichter 3, dem Abgasturbolader 4 und den Absperrorganen verbunden, wie durch die gestrichelten Linien in Fig. 1 dargestellt.

Fig. 2 zeigt ein Flussdiagramm eines Verfahrens 8 zum Betreiben der Antriebsvorrichtung AV aus Fig. 1.

Bei 80 wird ermittelt, ob der Verbrennungsmotor in einem Betrieb arbeitet, in dem ein aktuelles Motormoment kleiner als ein vorgegebenes Moment ist. Dazu empfängt die Steuervorrichtung 6 von einer Vielzahl an Sensoren, beispielsweise einem Gaspedalstellungssensor, einem Kupplungssensor, einem Getriebesensor und einem Drehzahlmesser des Verbrennungsmotors, Sensordaten, auf Grundlage derer die Steuervorrichtung 6 bestimmt, ob sich der Verbrennungsmotor in einem Leerlaufbetrieb, einem Schubbetrieb oder einem Niederlastbetrieb, also in einem Betrieb, in dem das Motormoment kleiner als das vorgegebene Moment ist, befindet. Wenn der Verbrennungsmotor in einem Betrieb arbeitet, in dem das aktuelle Motormoment gleich oder größer als das vorgegebene Moment ist, wird bei 80 erneut ermittelt, ob der Verbrennungsmotor in einem Betrieb arbeitet, in dem ein aktuelles Motormoment kleiner als ein vorgegebenes Moment ist.

Wenn der Verbrennungsmotor in einem Betrieb arbeitet, in dem das aktuelle Motormoment kleiner als das vorgegebene Moment ist, wird bei 81 ermittelt, ob ein Momenterhöhungserwartungsereignis vorliegt, infolge dessen eine Anforderung einer Motormomenterhöhung erfolgen kann. Dazu empfängt die Steuervorrichtung 6 beispielsweise Bilder von einer Kamera, die den Straßenverkehr überwacht. Die Steuervorrichtung 6 wertet die Bilder aus und prüft, ob eine Anforderung einer Motormomenterhöhung wahrscheinlich erfolgt. Zusätzlich empfängt die Steuervorrichtung 6 Signale von Sensoren wie einem Kupplungssensor, wertet die Signale aus und prüft, ob eine Anforderung einer Motormomenterhöhung wahrscheinlich erfolgt. Wenn kein Momenterhöhungserwartungsereignis vorliegt, wird bei 80 erneut ermittelt, ob der Verbrennungsmotor in einem Betrieb arbeitet, in dem ein aktuelles Motormoment kleiner als ein vorgegebenes Moment ist.

Wenn ein Momenterhöhungserwartungsereignis vorliegt, wird der elektrische Zusatzverdichter bei 82 aktiviert und bei einer Bereitschaftsdrehzahl betrieben. Dazu steuert die Steuervorrichtung den Zusatzverdichter entsprechend an. Die Aktivierung und der Betrieb bei der Bereitschaftsdrehzahl erfolgt vor der eigentlichen Anforderung einer Motormomenterhöhung. Dadurch wird der Zusatzverdichter bereits vor der eigentlichen Anforderung der Motormomenterhöhung in einen Standby-Modus versetzt, so dass ein Zielladedruck nach der Anforderung der Motormomenterhöhung schneller erzeugt wird als ohne die Vorkonditionierung durch den Zusatzverdichter.

Bei der Bereitschaftsdrehzahl erzeugt der Zusatzverdichter gerade noch kein Druckverhältnis und der Zusatzverdichter arbeitet entlang einer sog. Stopfgrenze SG.

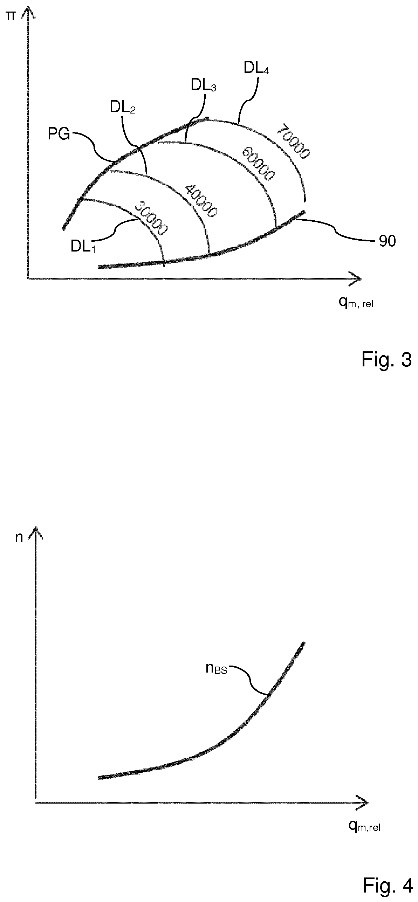

Fig. 3 zeigt die Stopfgrenze SG und eine Pumpgrenze PG des Zusatzverdichters in einem schematischen Kennfeld des Zusatzverdichters. Eine x-Achse des Kennfelds zeigt einen aktuellen reduzierten Massenstrom q_{m,rel} (reduzierten Ist-Massenstrom) und eine y-Achse ein Druckverhältnis π über dem Zusatzverdichter an.

Das Kennfeld zeigt für unterschiedliche Drehzahlen des Zusatzverdichters Drehzahllinien DL₁, DL₂, DL₃, DL₄, die jeweils einen Verlauf des Druckverhältnisses π über dem Zusatzverdichter in Abhängigkeit des reduzierten Ist-Massenstroms q_{m,rel} darstellen. Die Drehzahllinie DL₁ zeigt den Verlauf des Druckverhältnisses π bei einer Drehzahl von 30000 U/min, DL₂ bei einer Drehzahl von 40000 U/min, DL₃ bei einer Drehzahl von 60000U/min und DL₄ bei einer Drehzahl von 70000 U/min.

Im Kennfeld der Fig. 3 zeigt sich die Stopfgrenze an einem Beginn eines starken Abfalls der Drehzahllinien DL₁, DL₂, DL₃, DL₄ im niedrigen Druckverhältnisbereich, durch den das Erreichen des maximalen Volumenstromes angezeigt wird. Ein weiterer Anstiegt des Volumenstroms ist aufgrund des Querschnitts an einem Eingang des Zusatzverdichters und dem Erreichen der Schallgeschwindigkeit am Eingang des Zusatzverdichters unmöglich.

Die Pumpgrenze PG zeigt sich in Fig. 3 an einem Ende eines Plateaus der Drehzahllinien DL₁, DL₂, DL₃, DL₄ in einem hohen Druckverhältnisbereich, durch das sich zeigt, dass sich durch zu kleine Volumenströme und zu hohe Druckverhältnisse die Strömung von den Verdichterschaufeln löst. Bei Erreichen der Pumpgrenze PG wird keine Luft mehr gefördert. Diese strömt dann rückwärts durch den Zusatzverdichter bis sich wieder ein stabiler positiver Volumenstrom eingestellt hat.

Aus dem Kennfeld der Fig. 3 lässt sich die Bereitschaftsdrehzahl n_{BS} des Zusatzverdichters in Abhängigkeit des aktuellen reduzierten Massenstroms q_{m,rel} (des reduzierten Ist-Massenstroms) ableiten, die in Fig. 4 gezeigt ist. Die Bereitschaftsdrehzahl nimmt mit steigendem reduzierten Ist-Massenstrom q_{m,rel} exponentiell zu.

Bei 83 in Fig. 2 wird, wenn ein Momenterhöhungserwartungsereignis vorliegt, ermittelt, ob eine Motormomenterhöhung angefordert wird. Dazu werden beispielsweise Signale eines Sensors eines Gaspedals empfangen und ausgewertet, ob das Gaspedal gedrückt wird. Die Motormomenterhöhung wird beispielsweise angefordert, wenn das Gaspedal gedrückt wird.

Bei 84 wird, wenn die Motormomenterhöhung angefordert wird, der Zusatzverdichter auf eine Boostdrehzahl beschleunigt und das Motormoment erhöht. Die Boostdrehzahl ist höher als die Bereitschaftsdrehzahl n_{BS} und der Zusatzverdichter erzeugt bei der Boostdrehzahl ein unter den aktuellen Bedingungen maximal erreichbares Druckverhältnis π, d.h. der Zusatzverdichter arbeitet entlang der mit Bezug auf Fig. 3 bereits erläuterten Pumpgrenze PG.

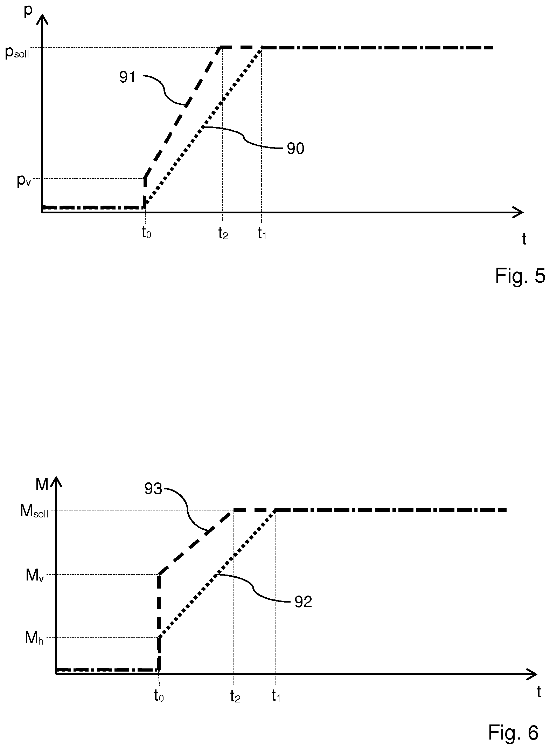

Durch den Standby-Betrieb des Zusatzverdichters vor der eigentlichen Anforderung einer Motormomenterhöhung kann der Ladedruck bei einer nachfolgenden Motormomenterhöhung schnell aufgebaut werden und das Motormoment schnell erhöht werden, wie Fig. 5 und Fig. 6 zeigen. Dadurch ergibt sich eine erhöhte Fahrdynamik.

Fig. 5 zeigt schematisch einen Verlauf des Ladedrucks vor, während und nach der Motormomenterhöhung für eine herkömmliche Antriebsvorrichtung ohne Vorkonditionierung durch den Zusatzverdichter (Ladedruckverlauf 90) und für die oben mit Bezug auf Fig. 1 beschriebene Antriebsvorrichtung AV (Ladedruckverlauf 91). Für eine herkömmliche Antriebsvorrichtung mit dem Ladedruckverlauf 90 entspricht der Ladedruck bis zum Zeitpunkt t₀ der eigentlichen Momentanforderung einem Umgebungsdruck. Vom Zeitpunkt t₀ der eigentlichen Momentanforderung an, steigt der Ladedruck an, bis sich zum Zeitpunkt t₁ ein gewünschter Ladedruck (Soll-Ladedruck) pₛₒₗₗ einstellt. Im Gegensatz dazu steigt der Ladedruck der Antriebsvorrichtung AV mit dem Ladedruckverlauf 91 spätestens zum Zeitpunkt t₀ der eigentlichen Momentanforderung aufgrund des Betriebs des Zusatzverdichters bei der Bereitschaftsdrehzahl vor der eigentlichen Momentanforderung sehr schnell von dem Umgebungsdruck auf einen Ladedruck pv an. Vom Zeitpunkt to der eigentlichen Momentanforderung steigt der Ladedruck schneller als bei der herkömmlichen Antriebsvorrichtung an und erreicht bereits bei einem Zeitpunkt t₂, der früher als der Zeitpunkt t₁ liegt, den gewünschten Ladedruck pₛₒₗₗ.

Fig. 6 zeigt schematisch einen Verlauf des von dem Verbrennungsmotor bereitgestellten Ist-Moments vor, während und nach der Motormomenterhöhung für eine herkömmliche Antriebsvorrichtung ohne Vorkonditionierung durch den Zusatzverdichter 3 (Momentenverlauf 92) und für die oben mit Bezug auf Fig. 1 beschriebene Antriebsvorrichtung AV (Momentenverlauf 93). Für die herkömmliche Antriebsvorrichtung mit dem Momentenverlauf 92 beträgt das Motormoment zum Zeitpunkt t₀ der eigentlichen Momentanforderung einen Wert Mₕ. Vom Zeitpunkt t₀ der eigentlichen Momentanforderung an, steigt das Motormoment an, bis zum Zeitpunkt t₁ ein gewünschtes Moment (Sollmoment) Mₛₒₗₗ erreicht ist. Im Gegensatz dazu steigt das Moment der Antriebsvorrichtung AV spätestens zum Zeitpunkt to der eigentlichen Momentanforderung aufgrund des Betriebs des Zusatzverdichters bei der Bereitschaftsdrehzahl n_{BS} vor der eigentlichen Momentanforderung sehr schnell von dem Moment Mₕ auf einen höheren Wert Mᵥ (Mₕ<Mᵥ) an. Vom Zeitpunkt to der eigentlichen Momentanforderung steigt das Moment schneller als bei der herkömmlichen Antriebsvorrichtung an und erreicht bereits bei einem Zeitpunkt t₂, der früher als der Zeitpunkt t₁ liegt, das gewünschte Moment Mₛₒₗₗ.

Bei 85 wird, sobald nach Erreichen eines der Motormomenterhöhung zugrundeliegenden gewünschten Motormoments ein Deaktivierungskriterium erfüllt ist, der Zusatzverdichter deaktiviert. Das Deaktivierungskriterium kann sein, dass ein konstanter Ladedruck pₖ herrscht, der allein aufgrund der Abgasenthalpie durch den Abgasturbolader aufrechterhalten werden kann.

Wird bei 83 in Fig. 2 ermittelt, dass keine Motormomenterhöhung angefordert wird, und wird die Motormomenterhöhung nicht innerhalb einer vorgegebenen Zeitspanne nach dem Momenterhöhungserwartungsereignis angefordert, wird bei 86 der Zusatzverdichter wieder deaktiviert. Die Zeitspanne richtet sich nach dem Momenterhöhungserwartungsereignis und beträgt einige Sekunden.

### Bezugszeichenliste

- 1: Verbrennungsmotor
- 2: Luftführungssystem
- 20: Luftzuführung
- 21: Abgaskanal
- 22: Bypass
- 23: Niederdruckbypass
- 24: Zusatzverdichterbypass
- 3: Zusatzverdichter
- 4: Abgasturbolader
- 40: Verdichter
- 41: Abgasturbine
- 50: Drosselklappe
- 51: Abgasklappe
- 52: Bypassventil
- 53: Niederdruckbypassventil
- 54: Zusatzverdichterbypassventil
- 6: Steuervorrichtung
- 70: Ladeluftkühler
- 71: Vorrichtung zur Abgasbehandlung
- 72: Kühler zum Kühlen von rückgeführtem Abgas
- 8: Verfahren zum Betreiben einer Antriebsvorrichtung
- 80: Ermitteln, ob der Verbrennungsmotor in einem Betrieb arbeitet, in dem ein Motormoment kleiner als ein vorgegebenes Moment ist
- 81: Ermitteln, ob ein Momenterhöhungserwartungsereignis vorliegt
- 82: Aktivieren und Betreiben des Zusatzverdichters bei einer Bereitschaftsdrehzahl
- 83: Ermitteln, ob eine Motormomenterhöhung angefordert wird
- 84: Erhöhen der Drehzahl des Zusatzverdichters auf eine Boostdrehzahl und Erhöhen des Motormoments
- 85: Deaktivieren des Zusatzverdichters nach Erreichen eines der Motormomenterhöhung zugrundeliegenden Motormoments
- 86: Deaktivieren des Zusatzverdichters bei Ausbleiben einer Anforderung einer Motormomenterhöhung
- 90: Ladedruckverlauf bei einer Motormomenterhöhung einer herkömmlichen Antriebsvorrichtung
- 91: Ladedruckverlauf bei einer Motormomenterhöhung einer Antriebsvorrichtung mit Vorkonditionierung
- 92: Moment bei einer Motormomenterhöhung einer herkömmlichen Antriebsvorrichtung
- 93: Moment bei einer Motormomenterhöhung einer Antriebsvorrichtung mit Vorkonditionierung

- AV: Antriebsvorrichtung
- PG: Pumpgrenze
- SG: Stopfgrenze
- q_{m,rel}: reduzierter Ist-Massenstrom
- π: Druckverhältnis über dem Zusatzverdichter
- DL₁, DL₂, DL₃, DL₄: Drehzahllinien
- n: Drehzahl des Zusatzverdichters
- n_{BS}: Bereitschaftsdrehzahl
- p: Ladedruck
- pᵥ, pₛₒₗₗ, pₕ: Ladedruckwerte
- t: Zeit
- t₀, t₁, t₂: Zeitpunkte
- M: Ist-Moment
- Mₛₒₗₗ: Soll-Moment
- Mᵥ, Mₕ: Ist-Momentwerte

## Patentansprüche

1. Verfahren zum Betreiben einer Antriebsvorrichtung (AV) mit einer Verbrennungskraftmaschine (1), einer Luftzuführung (20) zum Zuführen von Luft zur Verbrennungskraftmaschine (1) und einer steuerbaren Verdichtungskomponente (3) zum Beeinflussen eines Drucks in der Luftzuführung (20), umfassend:
Betreiben (82) der steuerbaren Verdichtungskomponente (3) mit einer Bereitschaftsdrehzahl (n_{BS}), wenn ein Verbrennungskraftmaschinenmoment der Verbrennungskraftmaschine kleiner als ein vorgegebenes Moment ist, wobei die Bereitschaftsdrehzahl (n_{BS}) von einem Luftmassenstrom durch die Luftzuführung (20) abhängt und wobei ein Druckverhältnis (π) über der steuerbaren Verdichtungskomponente (3) bei der Bereitschaftsdrehzahl (n_{BS}) einer Stopfgrenze (SG) entspricht.

2. Verfahren nach Anspruch 1, wobei das vorgegebene Moment geringer als ein Anteil eines unter aktuellen Betriebsbedingungen der Antriebsvorrichtung (AV) maximal erreichbaren Verbrennungskraftmaschinenmoments von 80 % ist.

3. Verfahren nach einem der vorhergehenden Ansprüche, wobei
die steuerbare Verdichtungskomponente (3) mit der Bereitschaftsdrehzahl (n_{BS}) betrieben wird (80, 82), wenn die Verbrennungskraftmaschine in einem vorgegebenen Betrieb arbeitet,
wobei der vorgegebene Betrieb ein Schubbetrieb, ein Leerlaufbetrieb, ein Niederlastbetrieb oder ein anderer Betrieb ist, in dem das Verbrennungskraftmaschinenmoment der Verbrennungskraftmaschine (1) kleiner als das vorgegebene Moment ist.

4. Verfahren nach einem der vorhergehenden Ansprüche, weiterhin umfassend:
Ermitteln (81, 82), ob ein Ereignis vorliegt, infolge dessen eine Anforderung einer Erhöhung des Verbrennungskraftmaschinenmoments erwartet wird,
wobei die Verdichtungskomponente (3) mit der Bereitschaftsdrehzahl (n_{BS}) betrieben wird, wenn das Verbrennungskraftmaschinenmoment kleiner als das vorgegebene Moment ist und ein Ereignis vorliegt, infolge dessen eine Anforderung einer Erhöhung des Verbrennungskraftmaschinenmoments erwartet wird.

5. Verfahren nach Anspruch 4, wobei das Ereignis, infolge dessen eine Anforderung einer Erhöhung des Verbrennungskraftmaschinenmoments erwartet wird, eine Änderung einer Umgebungsbedingung und/oder eine Änderung eines Zustands der Antriebsvorrichtung (AV), bei der das Verbrennungskraftmaschinenmoment der Verbrennungskraftmaschine (1) unterhalb des vorgegebenen Moments bleibt, umfasst.

6. Verfahren nach Anspruch 4 oder 5, wobei die Bereitschaftsdrehzahl (n_{BS}) der steuerbaren Verdichtungskomponente (3) von dem vorliegenden Ereignis, infolge dessen eine Anforderung einer Erhöhung des Verbrennungskraftmaschinenmoments erwartet wird, abhängt.

7. Steuervorrichtung (6) zum Betreiben einer Antriebsvorrichtung (AV) mit einer Verbrennungskraftmaschine (1), einer Luftzuführung (20) zum Zuführen von Luft zur Verbrennungskraftmaschine (1) und einer steuerbaren Verdichtungskomponente (3) zum Beeinflussen eines Drucks in der Luftzuführung (20), wobei die Steuervorrichtung (6) dazu ausgebildet ist, ein Verfahren (8) nach einem der Ansprüche 1 bis 6 auszuführen.

## Claims

1. Method for operating a drive device (AV) having an internal combustion engine (1), an air supply (20) for supplying air to the internal combustion engine (1) and a controllable compression component (3) for influencing a pressure in the air supply (20), comprising:
operating (82) the controllable compression component (3) with a standby rotational speed (n_{BS}) if an internal combustion engine torque of the internal combustion engine is lower than a predefined torque, wherein the standby rotational speed (n_{BS}) depends on an air mass flow rate by the air supply (20), and wherein a pressure ratio (_{TT}) across the controllable compression component (3) at the standby rotational speed (n_{BS}) corresponds to a choke limit (SG).

2. Method according to Claim 1, wherein the predefined torque is lower than a proportion of an internal combustion engine torque of 80%, which is the maximum which can be achieved under current operating conditions of the drive device (AV).

3. Method according to one of the preceding claims, wherein
the controllable compression component (3) is operated with the standby rotational speed (n_{BS}) (80, 82) if the internal combustion engine operates in a predefined operating mode,
wherein the predefined operating mode is an overrun mode, an idling mode, a low-load mode or some other mode in which the internal combustion engine torque of the internal combustion engine (1) is lower than the predefined torque.

4. Method according to one of the preceding claims, also comprising:
determining (81, 82) whether an event occurs which results in a request for an increase in the internal combustion engine torque being expected,
wherein the compression component (3) is operated with the standby rotational speed (n_{BS}) if the internal combustion engine torque is lower than the predefined torque and an event occurs which results in a request for an increase in the internal combustion engine torque being expected.

5. Method according to Claim 4, wherein the event which results in a request for an increase in the internal combustion engine torque being expected comprises a change in an ambient condition and/or a change in a state of the drive device (AV), in the case of which change the internal combustion engine torque of the internal combustion engine (1) remains below the predefined torque.

6. Method according to Claim 4 or 5, wherein the standby rotational speed (n_{BS}) of the controllable compression component (3) depends on the occurring event which results in a request for an increase in the internal combustion engine torque being expected.

7. Control device (6) for operating a drive device (AV) with an internal combustion engine (1), an air supply (20) for supplying air to the internal combustion engine (1) and a controllable compression component (3) for influencing a pressure in the air supply (20), wherein the control device (6) is designed to carry out a method (8) according to one of Claims 1 to 6.

## Revendications

1. Procédé pour faire fonctionner un dispositif d'entraînement (AV) comprenant un moteur à combustion interne (1), une arrivée d'air (20) destinée à acheminer de l'air au moteur à combustion interne (1) et un composant de compression (3) commandable destiné à influencer une pression dans l'arrivée d'air (20), comprenant :
la mise en fonctionnement (82) du composant de compression (3) commandable avec une vitesse de rotation de réserve (n_{BS}) lorsqu'un couple de moteur à combustion interne du moteur à combustion interne est inférieur à un couple prédéfini, la vitesse de rotation de réserve (n_{BS}) dépendant d'un débit massique d'air à travers l'arrivée d'air (20) et un rapport de pression (π) de part et d'autre du composant de compression (3) commandable à la vitesse de rotation de réserve (n_{BS}) correspondant à une limite d'obstruction (SG).

2. Procédé selon la revendication 1, le couple prédéfini étant inférieur à une part d'un couple de moteur à combustion interne maximal de 80 % qui peut être atteint dans les conditions de fonctionnement actuelles du dispositif d'entraînement (AV).

3. Procédé selon l'une des revendications précédentes, le composant de compression (3) commandable fonctionnant (80, 82) à la vitesse de rotation de réserve (n_{BS}) lorsque le moteur à combustion interne fonctionne dans un régime prédéfini,
le régime prédéfini étant un régime de poussée, un régime de fonctionnement à vide, un régime de charge réduite ou un autre régime dans lequel le couple de moteur à combustion interne du moteur à combustion interne (1) est inférieur au couple prédéfini.

4. Procédé selon l'une des revendications précédentes, comprenant en outre :
la détermination (81, 82) du fait qu'un événement en conséquence duquel une demande d'une augmentation du couple de moteur à combustion interne est attendue se produit ou non,
le composant de compression (3) fonctionnant à la vitesse de rotation de réserve (n_{BS}) lorsque le couple de moteur à combustion interne est inférieur au couple prédéfini et qu'un événement en conséquence duquel une demande d'une augmentation du couple de moteur à combustion interne est attendue se produit.

5. Procédé selon la revendication 4, l'événement en conséquence duquel une demande d'une augmentation du couple de moteur à combustion interne est attendue comprenant une modification d'une condition environnante et/ou une modification d'un état du dispositif d'entraînement (AV) avec laquelle le couple de moteur à combustion interne du moteur à combustion interne (1) reste au-dessous du couple prédéfini.

6. Procédé selon la revendication 4 ou 5, la vitesse de rotation de réserve (n_{BS}) du composant de compression (3) commandable étant dépendante de l'événement qui se produit en conséquence duquel une demande d'une augmentation du couple de moteur à combustion interne est attendue.

7. Dispositif de commande (6) pour faire fonctionner un dispositif d'entraînement (AV) comprenant un moteur à combustion interne (1), une arrivée d'air (20) destinée à acheminer de l'air au moteur à combustion interne (1) et un composant de compression (3) commandable destiné à influencer une pression dans l'arrivée d'air (20), le dispositif de commande (6) étant configuré pour mettre en œuvre un procédé (8) selon l'une des revendications 1 à 6.
